# EUROPEAN PATENT SPECIFICATION

(11) **EP 4 489 200 B1**
(45) Date of publication and mention of the grant of the patent: **18.11.2026**
(21) Application number: 22929971.4
(22) Date of filing: 23.12.2022
(51) Int. Cl.: H01M 50/271, H01M 50/204, H01M 50/213, H01M 50/291, H01M 50/249

(54) **BATTERY PACK AND MANUFACTURING METHOD THEREFOR**
BATTERIEPACK UND HERSTELLUNGSVERFAHREN DAFÜR
BLOC-BATTERIE ET SON PROCÉDÉ DE FABRICATION

(30) Priority: 04.03.2022 JP 2022033101
(43) Date of publication of application: 08.01.2025
(73) Proprietor: Panasonic Energy Co., Ltd., Osaka 570-8511 (JP)
(72) Inventor: OSHIMA, Yasufumi, Kadoma-shi, Osaka 571-0057 (JP); ARIKAWA, Hiroshi, Kadoma-shi, Osaka 571-0057 (JP); FUKUDA, Shinsuke, Kadoma-shi, Osaka 571-0057 (JP)
(74) Representative: Novagraaf International SA
(86) International application number: PCT/JP2022/047565
(87) International publication number: WO 2023/166829

(56) References cited:
- WO-A1-2021/193557
- WO-A1-2021/193557
- CN-U- 205 248 331
- CN-U- 207 883 768
- JP-A- H07 176 298
- JP-B2- 5 496 746
- KR-A- 20210 093 637

## Description

### TECHNICAL FIELD

The present disclosure relates to a battery pack and a manufacturing method therefor.

### BACKGROUND ART

A battery pack including secondary battery cells connected in series and in parallel to one another is used as a power source for an assist bicycle or a power source for a portable electric device, such as an electric cleaner or an electric tool, or is used as a backup power source for a server or a power source device for home use, office use, or factory use in a stationary power storage application, and is further used as a driving power source or the like for a vehicle, such as an electric scooter, an electric cart, or a hybrid vehicle or an electric vehicle (PTL 1).

In such a battery pack, a configuration is widely adopted in which a large number of secondary battery cells are housed in a main tubular body and an opening end of the main tubular body is closed with a lid. In this configuration, for the purpose of imparting a waterproof property to the battery pack, a bonding interface between the opening end of the main tubular body and the lid may be sealed with an adhesive.

### CITATION LIST

### Patent Literature

PTL 1: Japanese Patent Laid-Open Publication No. 2011-216366
PTL 2: WO 2021 193557 A1 about an electrical storage module

### SUMMARY OF INVENTION

The invention according to claim 1 relates to a battery pack comprising: a core block including one or more secondary battery cells; a main tubular body having an opening end and having a core housing space therein, the core housing space housing the core block therein; a lid closing the opening end of the main tubular body; an adhesive fixing the lid to the main tubular body; and an adhesive holder provided between the lid and the core block, the adhesive holder having a surface facing the lid, the surface of the lid having a flat region at least at periphery of the surface of the lid. The adhesive holder constitutes an adhesive holding space on the flat region, the adhesive holding space holding the adhesive. The lid and the main tubular body constitute an adhesive guide path between the lid and an inner surface of the main tubular body, the adhesive guide path allowing the adhesive holding space to communicate with a bonding interface at which the lid is bonded to an end surface of the opening end of the main tubular body, the adhesive guide path guiding the adhesive to the bonding interface through the adhesive guide path.

The invention according to claim 9 relates to a method for manufacturing a battery pack. In a method for manufacturing a battery a core block including one or more secondary battery cells is prepared. A main tubular body having an opening end and having a core housing space therein is prepared. A lid including a lid wall protruding in a protruding direction, the lid wall having a lid end surface which is flat and which faces in the protruding direction is prepared. An adhesive holder including a holder rib protruding from the flat region, the adhesive holder including a flat region at least at a periphery of the adhesive holder is prepared. The core block is housed in the core housing space of the main tubular body. An adhesive is disposed between the flat region and the holder rib of the adhesive holder. The adhesive is supplied to a bonding interface at which the lid is to be bonded to the end surface of the opening end of the main tubular body by causing the lid to face the adhesive holder while the adhesive holder is placed on an end surface of the core block, pressing the lid wall against the flat region to cause the lid wall to protrude toward the flat region so as to cause the lid end surface of the lid wall to push out the adhesive disposed in the flat region. The opening end of the main tubular body is closed with the lid by curing the adhesive.

According to the battery pack and the manufacturing method therefor in one aspect of the disclosure, a stable sealing property is easily ensured while preventing the adhesive from protruding.

According to the method for manufacturing the battery pack according to one aspect of the disclosure, during assembly work of bonding the lid and the main tubular body, the adhesive is held in the adhesive holding space, so that it is possible to simplify the work of applying the adhesive.

### BRIEF DESCRIPTION OF DRAWINGS

FIG. 1 is a perspective view of a battery pack according to Exemplary Embodiment 1.
FIG. 2 is an exploded perspective view of the battery pack shown in FIG. 1.
FIG. 3 is an exploded perspective view of a core block shown in FIG. 2 further disassembled.
FIG. 4 is an enlarged exploded perspective view of an opening end portion of the battery pack shown in FIG. 1.
FIG. 5 is an exploded perspective view of the opening end portion shown in FIG. 4 viewed from rear.
FIG. 6 is an enlarged cross-sectional view of the battery pack shown in FIG. 1.
FIG. 7 is an enlarged cross-sectional view of a main part of FIG. 6.
FIG. 8 is an exploded cross-sectional view of a battery pack according to a comparative example showing a state in which an adhesive is applied to the battery pack.
FIG. 9 is an exploded cross-sectional view of the battery pack according to the comparative example for showing a state in which a lid of the battery pack is bonded.
FIG. 10 is a schematic cross-sectional view of the battery pack for showing an assembling process of the battery pack.
FIG. 11 is a schematic cross-sectional view of the battery pack for showing an assembling process of the battery pack.
FIG. 12 is a schematic cross-sectional view of the battery pack for showing an assembling process of the battery pack.
FIG. 13 is a cross-sectional view of a battery pack according to Exemplary Embodiment 2.
FIG. 14 is a side view of an adhesive holder of the battery pack according to Embodiment 2.
FIG. 15 is a cross-sectional view of a battery pack according to Exemplary Embodiment 3.
FIG. 16 is a side view of an adhesive holder of the battery pack according to Embodiment 3.
FIG. 17 is a cross-sectional view of a battery pack according to Exemplary Embodiment 4.
FIG. 18 is a side view pf an adhesive holder of the battery pack according to Embodiment 4.
FIG. 19 is a side view of an adhesive holder of a battery pack according to Exemplary Embodiment 5.

### DESCRIPTION OF EMBODIMENT

While an adhesive is generally liquid in an uncured state, the conventional battery pack hardly allows the adhesive to be applied to an inner surface of a main tubular body and a periphery of a lid. In addition, the sealing the adhesive provides a problem that the adhesive protrudes from a bonding interface between the main tubular body and the lid to the outside of the battery pack, deteriorating the appearance.

A battery pack according to an aspect of the disclosure includes: a core block including one or more secondary battery cells; a main tubular body having an opening end and having a core housing space therein, the core housing space housing the core block therein; a lid closing the opening end of the main tubular body; an adhesive fixing the lid to the main tubular body; and an adhesive holder provided between the lid and the core block, the adhesive holder having a surface facing the lid, the surface of the lid having a flat region at least at periphery of the surface of the lid. The adhesive holder constitutes an adhesive holding space on the flat region, the adhesive holding space holding the adhesive. The lid and the main tubular body constitute an adhesive guide path between the lid and an inner surface of the main tubular body, the adhesive guide path allowing the adhesive holding space to communicate with a bonding interface at which the lid is bonded to an end surface of the opening end of the main tubular body, the adhesive guide path guiding the adhesive to the bonding interface through the adhesive guide path.

In the battery pack according to another aspect of the disclosure, in the above aspect, the adhesive holding space is located away from the bonding interface at which the lid is bonded to the end surface of the opening end of the main tubular body. In the above configuration, the adhesive holding space is located away from the bonding interface between the lid and the main tubular body. When the adhesive is supplied to the adhesive holding space, the adhesive is not erroneously applied to an exposed portion.

In addition, in the battery pack according to another aspect of the disclosure, in any one of the above aspects, the lid includes a lid wall protruding in a protruding direction along an inner surface of the main tubular body connected to the end surface of the opening end of the main tubular body. The lid wall has a lid end surface which is flat and which faces in the protruding direction. The adhesive holding space is defined between the flat region and the lid end surface.

Further, in the battery pack according to another aspect of the disclosure, in any one of the above aspects, the lid wall further has: a lid facing surface facing the inner surface of the main tubular body connected to the end surface of the opening end of the main tubular body, the lid facing surface crossing the lid end surface; and a lid inner surface opposite to the lid facing surface, the lid inner surface crossing the lid end surface. The adhesive guide path is defined between the lid facing surface of the lid and the inner surface of the main tubular body connected to the end surface of the opening end of the main tubular body.

Further, in the battery pack according to another aspect of the disclosure, in any of the above aspects, the adhesive holder includes a holder rib protruding from the flat region, the holder rib facing the lid inner surface of the lid wall. The lid wall and the holder rib constitute an adhesive retraction path communicating with the adhesive holding space between the lid inner surface of the lid wall and the holder rib. In the above configuration, during assembling work of bonding the lid and the main tubular body, an excess portion of the adhesive held in the adhesive holding space is introduced to the adhesive retraction path in a direction away from the bonding interface between the lid and the main tubular body. Therefore, the excess portion of the adhesive is prevented from protruding from the bonding interface between the lid and the main tubular body.

Further, in the battery pack according to another aspect of the disclosure, in any one of the above aspects, the lid constitutes an adhesive induction space communicating with the adhesive guide path, the an adhesive induction space being branched from the bonding interface at which the lid is bonded to the end surface of the opening end of the main tubular body. In the above configuration, a part of the adhesive guided to the adhesive guide path is branched into the adhesive induction space instead of the bonding interface between the end surface of the opening end of the main tubular body and the lid. Therefore, it is possible to prevent a situation in which the excess adhesive leaks from the bonding interface.

Further, in the battery pack according to another aspect of the disclosure, in any one of the above aspects, the adhesive holder has a plate shape having an opening at a center thereof. In the above configuration, a weight of the adhesive holder and an amount of resin used are reduced, accordingly reducing a weight and cost of the battery pack.

Further, in the battery pack according to another aspect of the disclosure, in any one of the above aspects, the adhesive holder is formed unitarily with the core block. In the above configuration, the adhesive holding space is formed in the core block itself, and a simple configuration in which an increase in the number of components is prevented can be implemented.

A battery pack according to the disclosure may be used as a power source for a portable electric device such as an electric cleaner or an electric tool, or can be used as a backup power source for a server or a power source device for home use, office use, or factory use in a stationary power storage application, and can be further used as a driving power source for an assist bicycle, or a driving power source or the like for a vehicle such as an electric scooter, an electric cart, or a hybrid vehicle or an electric vehicle. Hereinafter, a battery pack for an assist bicycle will be described as an embodiment of the disclosure.

### Exemplary Embodiment 1

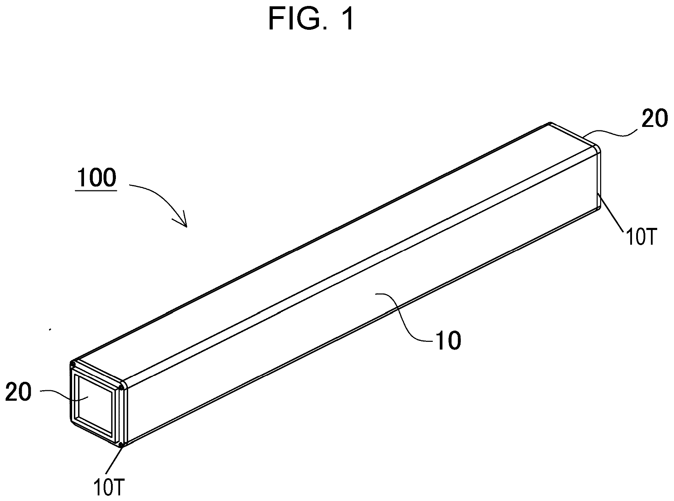

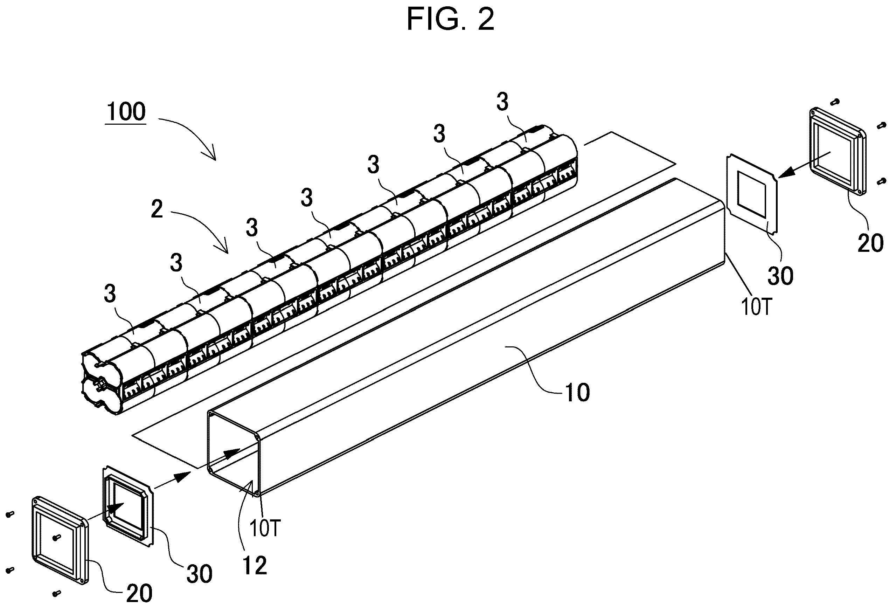

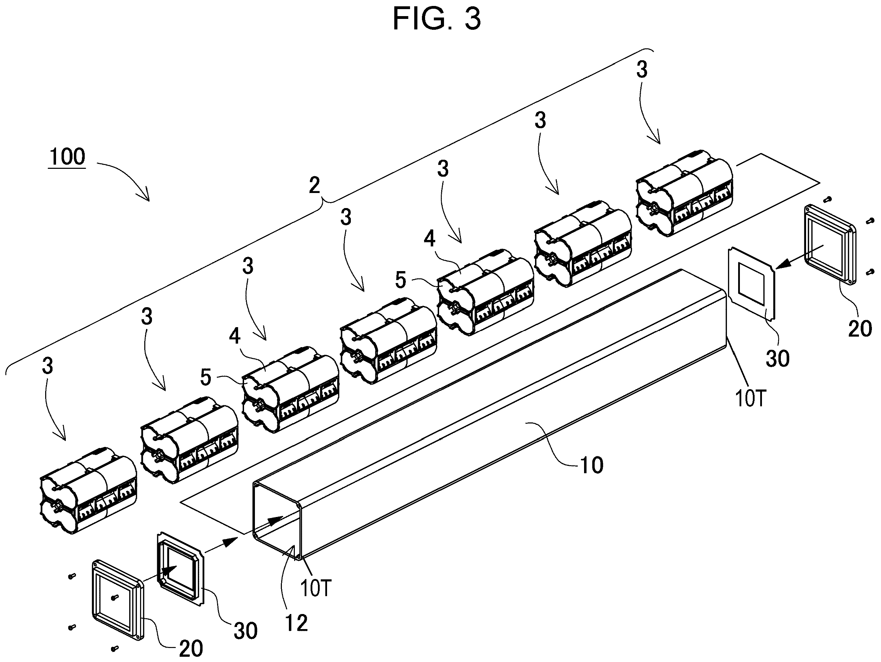

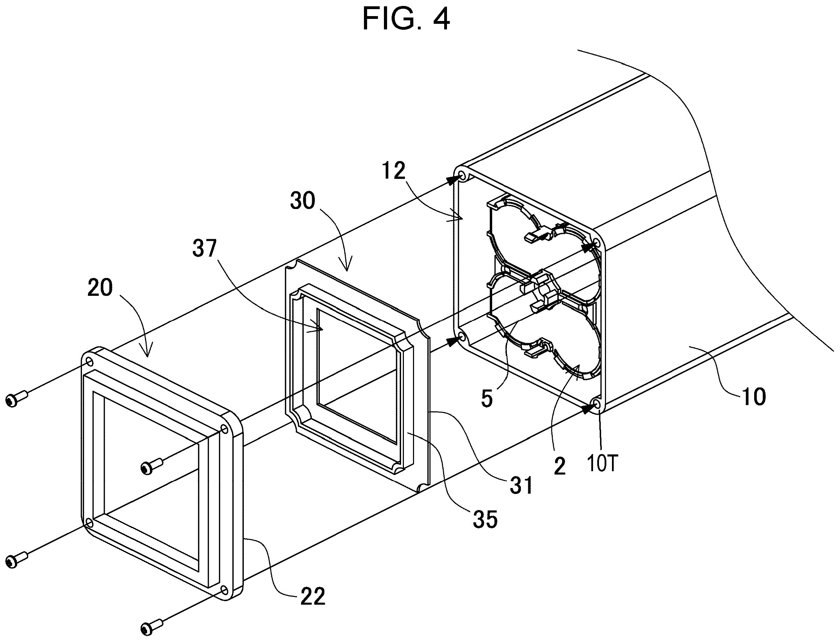

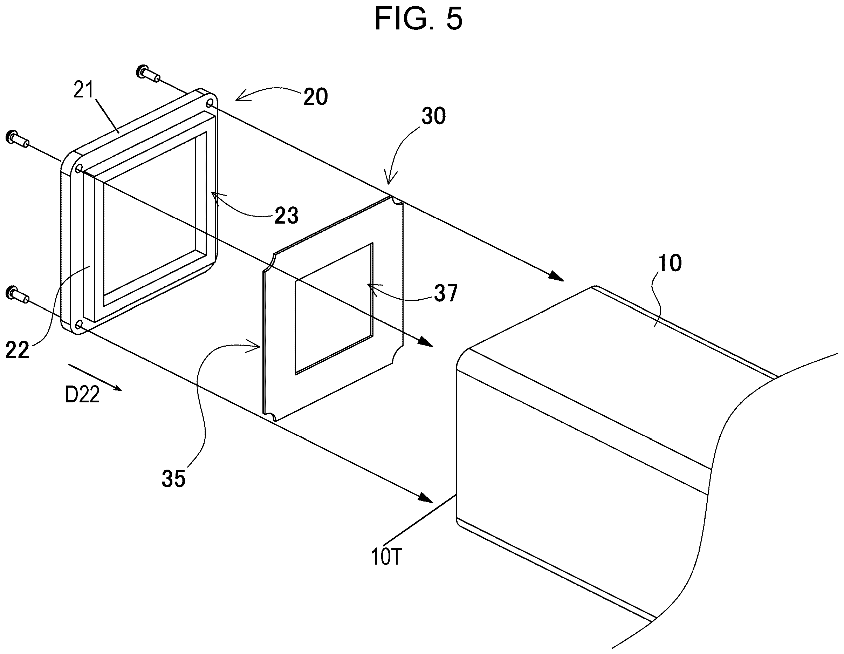

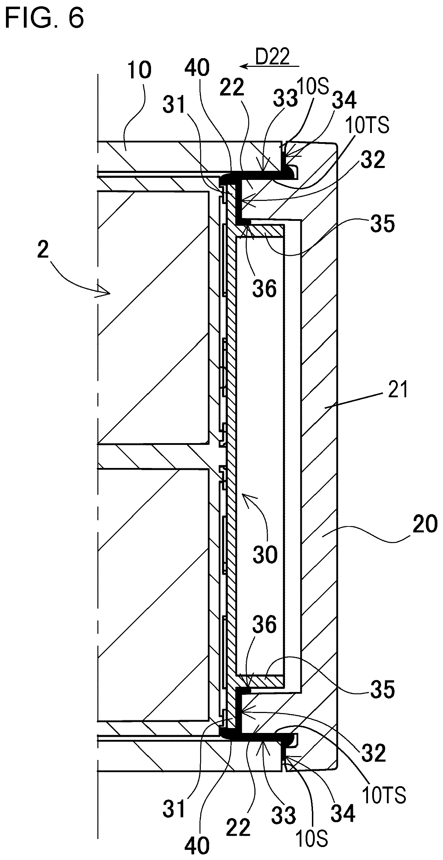

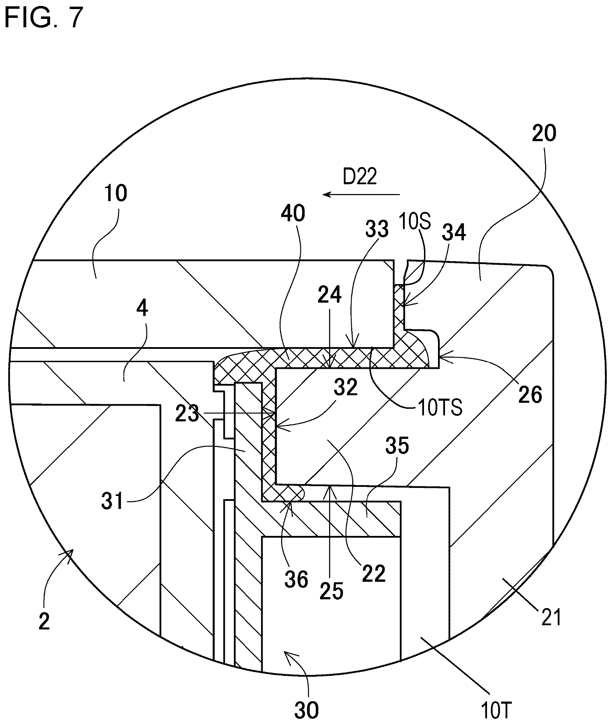

Battery pack 100 according to Exemplary Embodiment 1 of the disclosure is shown in FIGS. 1-7. FIG. 1 is an external perspective view of battery pack 100 according to Embodiment 1. FIG. 2 is an exploded perspective view of battery pack 100 shown in FIG. 1. FIG. 3 is an exploded perspective view of the battery pack in which core block 2 shown in FIG. 2 is further disassembled. FIG. 4 is an enlarged exploded perspective view of battery pack 100 shown in FIG. 1 for showing an opening end portion of battery pack 100. FIG. 5 is an exploded perspective view of the opening end portion shown in FIG. 4 viewed from rear. FIG. 6 is an enlarged cross-sectional view of battery pack 100 shown in FIG. 1. FIG. 7 is an enlarged cross-sectional view of a main part of the battery pack shown in FIG. 6. Battery pack 100 shown in these drawings includes main tubular body 10, lid 20, adhesive holder 30, and core block 2.

As shown in FIGS. 1 and 2, main tubular body 10 has a tubular shape and has opening end 10T therein. Main tubular body 10 has core housing space 12 therein for housing core block 2 in core housing space 12.

### Lid 20

Lid 20 closes opening end 10T of main tubular body 10. In the example shown in FIGS. 2-4, both ends of main tubular body 10 are open, and opening ends 10T are closed by a pair of lids 20 to constitute a housing of battery pack 100. As shown in FIG. 1, an outer shape of the housing is an elongated shape. In the example of FIGS. 2-5, lid 20 is fixed to opening end 10T of main tubular body 10 by screwing. As will be described later, a bonding interface between lid 20 and main tubular body 10 is sealed with adhesive 40.

Lid 20 is preferably made of resin having an excellent insulating property. For example, a polycarbonate resin can be used.

### Adhesive Holder 30

As shown in FIGS. 4-7, adhesive holder 30 is interposed between lid 20 and core block 2 at opening end 10T of main tubular body 10. Adhesive holder 30 has a surface facing lid 20. The surface of adhesive holder 30 includes flat region 31 at least at a periphery of the surface. In addition, adhesive holding space 32 for holding adhesive 40 that fixes lid 20 to main tubular body 10 is formed in flat region 31 of adhesive holder 30. In this configuration, during assembling of bonding lid 20 and main tubular body 10, adhesive 40 is held in adhesive holding space 32, simplifying the work of applying adhesive 40.

### Comparative Example

For the purpose of providing a battery pack with a waterproof property and airtightness, a gap between an opening end of a main tubular body and a lid may be sealed. For such seal, an O-ring, a rubber packing, and the like is used. In this case, molding accuracy of the main tubular body and the lid becomes an issue. Generally, the molding accuracy is high when the main tubular body and the lid are made of metal. However, when the main tubular body and the lid are made of resin, shrinkage and the like occurs, so that the molding accuracy may be low. Therefore, in the case of using the lid and the main tubular body made of resin, accuracy of a bonding surface may not be exhibited. As a result, a sufficient sealing property may not be obtained by the O-ring. Therefore, it is conceivable to fill and seal a bonding interface between the main tubular body made of resin and the lid made of resin with an adhesive.

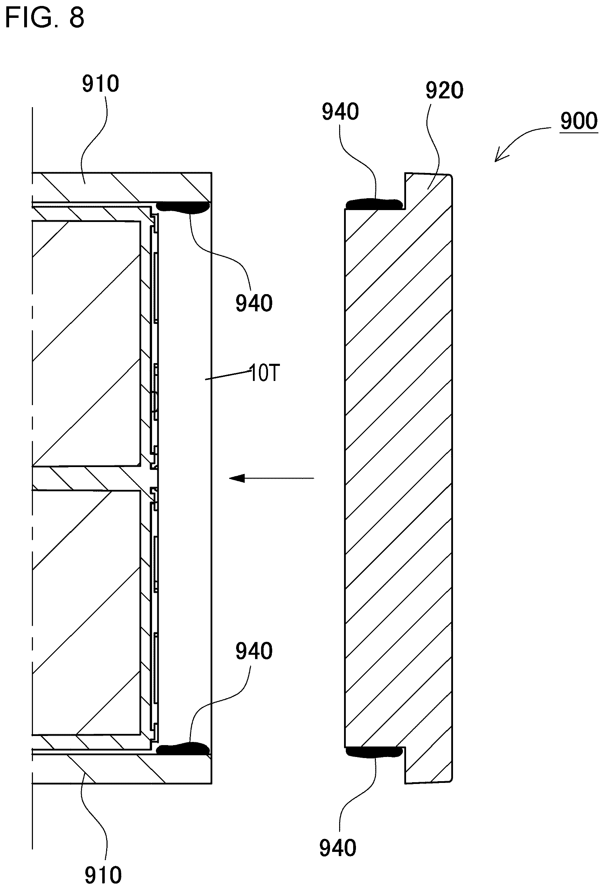

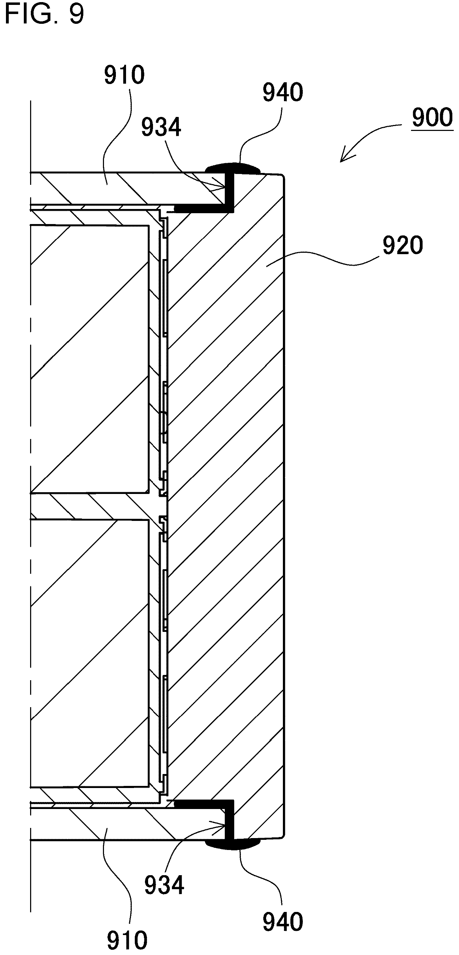

However, since the adhesive is often liquid in an uncured state, adhesive 940 may be hardly applied to an inner surface side of an opening end of main tubular body 910 as in battery pack 900 in Comparative Example shown in an exploded cross-sectional view of FIG. 8. In addition, when adhesive 940 is applied to a bonding portion with the opening end of lid 920, it is necessary to prevent adhesive 940 from adhering to a surface of lid 920, and it is also troublesome. In addition, after adhesive 940 is applied, as shown in a cross-sectional view of FIG. 9, there is also a problem that adhesive 940 protrudes to the outside of battery pack 900 from bonding interface 934 between main tubular body 910 made of resin and lid 920 made of resin, thus deteriorating the appearance. On the other hand, when an application amount of adhesive 940 is limited in order to prevent the leakage of adhesive 940, adhesive 940 does not spread over entire bonding interface 934 between main tubular body 910 and lid 920, and a seal length necessary for exhibiting an adhesive strength may not be ensured. As a result, this may be a cause of failure in sealing.

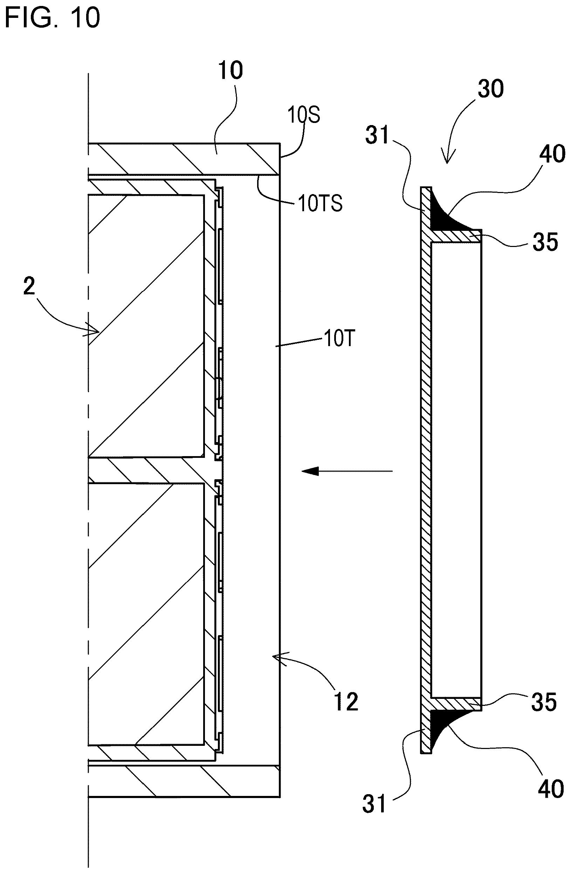

In contrast, in battery pack 100 according to the embodiment, adhesive holder 30 is added to the inner surface of lid 20 to constitute adhesive holding space 32 for holding adhesive 40 therein. Accordingly, as shown in a schematic cross-sectional view of FIG. 10, adhesive 40 may be easily applied. In particular, since adhesive holder 30 is provided as a separate member from core block 2, lid 20, and the like, and adhesive holder 30 is separated from core block 2 and lid 20 when adhesive 40 is supplied. Therefore, an advantage is obtained in that adhesive 40 is prevented from adhering to an unnecessary portion and work such as application and supply can be easily performed.

In addition, adhesive holding space 32 is formed at a position away from bonding interface 34 between lid 20 and end surface 10S of opening end 10T of main tubular body 10. Accordingly, adhesive holding space 32 located away from bonding interface 34 between lid 20 and main tubular body 10, when adhesive 40 is supplied to adhesive holding space 32, adhesive 40 is prevented from being erroneously applied to an exposed portion when adhesive 40 is supplied to adhesive holding space 32.

In addition, adhesive guide path 33 communicating between adhesive holding space 32 and bonding interface 34 between lid 20 and end surface 10S of opening end 10T of main tubular body 10 is formed between lid 20 and the inner surface of main tubular body 10. Adhesive 40 held in adhesive holding space 30 is guided by adhesive guide path 33 to reach bonding interface 34. Adhesive 40 guided by adhesive guide path 33 is cured even when adhesive 40 does not reach bonding interface 34 or even when the amount of adhesive 40 that has reached bonding interface 34 is small while adhesive 40 is supplied to bonding interface 34 between lid 20 and main tubular body 10, so that lid 20 is bonded to main tubular body 10 and the sealing property is exhibited.

Further, as shown in the enlarged cross-sectional view of FIG. 7, lid 20 constitutes adhesive induction space 26 communicating with adhesive guide path 33. Adhesive induction space 26 is branched from adhesive guide path 33 to bonding interface 34 between lid 20 and end surface 10S of opening end 10T of main tubular body 10. In this configuration, a part of adhesive 40 guided to adhesive guide path 33 is branched into adhesive induction space 26 instead of bonding interface 34 between lid 20 and end surface 10S of opening end 10T of main tubular body 10. Therefore, excess adhesive is prevented from leaking from bonding interface 34. In the example of FIG. 7, adhesive induction space 26 extends linearly from adhesive guide path 33 while in this process, crossing the path to bonding interface 34 between lid 20 and end surface 10S of opening end 10T of main tubular body 10. This configuration allows adhesive 40 to be pushed out to adhesive guide path 33 and move straight and a part thereof is accumulated in adhesive induction space 26. Then, a part of remaining adhesive is pushed up to bonding interface 34 between lid 20 and end surface 10S of opening end 10T of main tubular body 10. As a result, the excess of adhesive 40 is accumulated in adhesive induction space 26 and prevented from protruding from bonding interface 34. In addition, adhesive induction space 26 is preferably wider than bonding interface 34 between lid 20 and end surface 10S of opening end 10T of main tubular body 10. Accordingly, adhesive 40 is more easily guided to adhesive induction space 26 than to bonding interface 34. Further, adhesive induction space 26 is preferably wider than adhesive guide path 33. Accordingly, adhesive 40 is easily drawn toward adhesive induction space 26, and adhesive 40 is prevented from flowing toward core housing space 12 and is wasted without exhibiting an adhesive function.

As shown in FIGS. 5 and 7, lid 20 includes lid wall 22 protruding along inner surface 10TS of main tubular body 10 connected to end surface 10S of opening end 10T of main tubular body 10. Specifically, lid 20 includes lid body 21 having a flat region and lid wall 22 protruding from lid body 21 in protruding direction D22. A protruding end surface of lid wall 22 is flat lid end surface 23 facing protruding direction D22. Adhesive holding space 32 is defined between flat region 31 and lid end surface 23.

Lid wall 22 is preferably formed unitarily with lid 20. However, the lid wall may be formed as a separate member and fixed to the lid.

Lid wall 22 has lid facing surface 24 and lid inner surface 25 as side surfaces crosses lid end surface 23. Lid facing surface 24 out of the side surfaces of lid wall 22 faces inner surface 10TS of main tubular body 10 connected to end surface 10S of opening end 10T of main tubular body 10. In addition, lid inner surface 25 is a surface opposite to lid facing surface 24. Adhesive guide path 33 is defined between lid facing surface 24 and inner surface 10TS of main tubular body 10 connected to end surface 10S of opening end 10T of main tubular body 10.

### Holder Rib 35

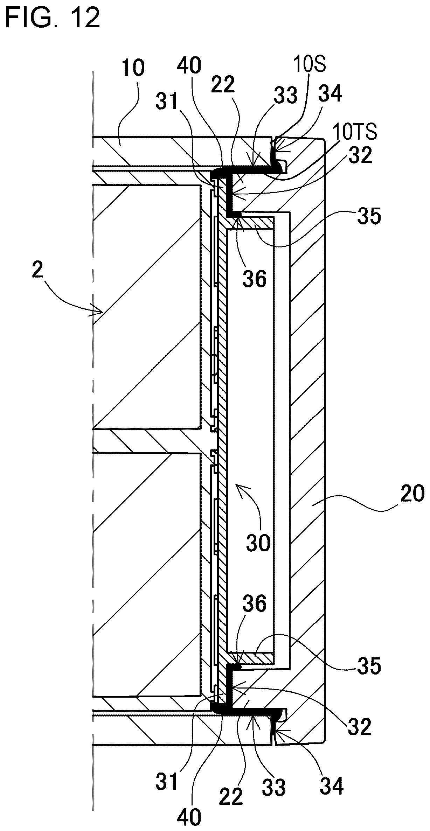

As shown in FIGS. 5 and 7, adhesive holder 30 includes holder rib 35 protruding from flat region 31 to face lid inner surface 25 of lid wall 22. Holder rib 35 has a ring shape along flat region 31. Adhesive retraction path 36 communicating with adhesive holding space 32 is defined between holder rib 35 and lid inner surface 25 of lid wall 22 similarly having a ring shape. With such a configuration, as shown in a schematic cross-sectional view of FIG. 12, during assembling work of bonding lid 20 and main tubular body 10, an excess portion of adhesive 40 held in adhesive holding space 32 is introduced to adhesive retraction path 36 away from bonding interface 34 between lid 20 and main tubular body 10. Therefore, the excess portion of adhesive 40 is prevented from protruding from bonding interface 34 between lid 20 and main tubular body 10.

Adhesive holder 30 is also preferably made of resin having an excellent insulating property. For example, a polycarbonate resin can be used. In addition, holder rib 35 is preferably formed unitarily with adhesive holder 30. However, the holder rib may also be formed as a separate member and fixed to the adhesive holder.

As shown in the perspective views of FIGS. 4 and 5, adhesive holder 30 may have opening 37 in the center of the plate shape. With such a configuration, a weight of adhesive holder 30 and an amount of resin used are reduced, accordingly reducing a weight and cost of the battery pack.

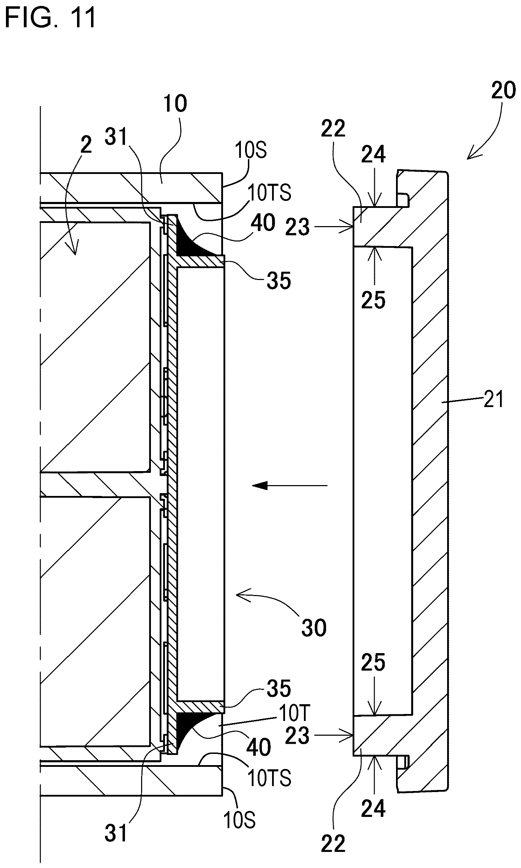

On the other hand, as shown in FIG. 11, adhesive holder 30 protrudes from flat region 31 such that holder rib 35 is located away from main tubular body 10 while adhesive holder 30 is set on core block 2. With such an arrangement, adhesive 40 is easily accumulated and hardly protrudes to an extra portion. In addition, as shown in FIG. 12, adhesive 40 pushed out by lid wall 22 moves to adhesive guide path 33, and is applied to a desired portion, and adhesive 40 is easily supplied to an intended portion even after components are assembled.

In addition, adhesive guide path 33 defined by lid facing surface 24 of lid wall 22 and inner surface 10TS of main tubular body 10 connected to end surface 10S of opening end 10T of main tubular body 10 preferably extends elongatedly along inner surface 10TS of main tubular body 10. Long adhesive guide path 33 ensures a long seal distance for preventing leakage object from the inside to the outside of the battery pack or intrusion object from the outside to the inside of the battery pack, and it is possible to improve the sealing property.

### Core Block 2

As shown in FIG. 3, core block 2 includes battery blocks 3 connected to one another. In each battery block 3, secondary battery cells 1 are disposed at a predetermined position in battery holder 4. Core block 2 is housed in main tubular body 10 while battery blocks 3 are stacked in an axial direction of main tubular body 10. Fastening member 6 fastens the pair of lids 20 via core block 2.

In core block 2, battery blocks 3 each including secondary battery cells 1 disposed in multiple rows and columns in battery holder 4 are stacked in a longitudinal direction of secondary battery cells 1, and are linearly connected. Core block 2 shown in FIG. 3 includes seven battery blocks 3. In core block 2, secondary battery cells 1 are connected in parallel one another to increase a battery capacity (Ah), and secondary battery cells 1 are connected in series to one another to increase an output voltage (V). The number of connected core blocks 2 is not limited to seven, and may be appropriately changed depending on the required output and capacity.

### Battery Block 3

In each battery block 3, insertion tube portions of secondary battery cells 1 are provided in battery holder 4, secondary battery cells 1 are inserted into the insertion tube portions, and secondary battery cells 1 are disposed at predetermined positions. In battery block 3, as shown in an exploded perspective view of FIG. 3, chargeable secondary battery cells 1 are disposed in multiple rows and columns in battery holder 4.

Secondary battery cell 1 is a cylindrical chargeable secondary battery and a lithium ion secondary battery. However, in the disclosure, the secondary battery cell is not limited to a lithium ion battery, and all other chargeable secondary batteries such as a nickel-hydrogen secondary battery cell, a nickel-cadmium battery, and a lithium polymer battery can be used.

In battery block 3, secondary battery cells 1 are disposed parallel to one another in which longitudinal directions of secondary battery cells 1 are directed in the same direction. Secondary battery cells 1 constituting battery block 3 are connected to one another with lead plate 5 connected to end surface electrodes at both ends of secondary battery cell 1 so as to have a desired parallel number and a desired series number, or are connected to each other on a circuit board. In core block 2 shown in FIG. 3, seven battery blocks 3 each holding four secondary battery cells 1 are connected to one another. As a whole, twenty eight secondary battery cells 1 are connected in 2-parallel and 14-series. However, in core block 2, the number of secondary battery cells and a connection form can be arbitrarily changed.

### Exemplary Embodiment 2

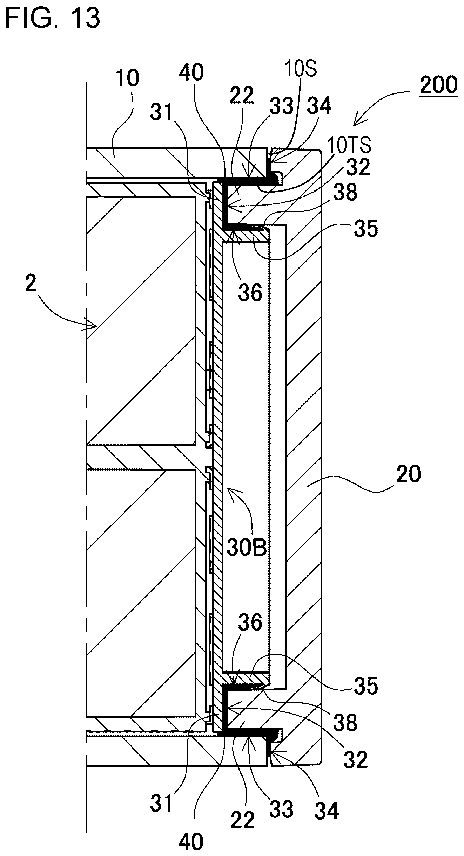

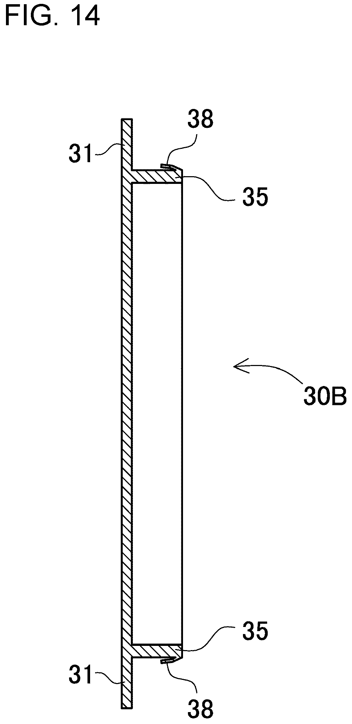

A shape of adhesive holder 30 is not limited to that described above, and various forms can be adopted. As an example, FIG. 13 is a cross-sectional view of battery pack 200 according to Exemplary Embodiment 2. FIG. 14 is a side view of adhesive holder 30. In these figures, components identical to those of Embodiment 1 are denoted by the same reference numerals, and their detailed description will be omitted.

### Rib Elastic Skirt 38

In adhesive holder 30B shown in FIG. 14, rib elastic skirt 38 is provided on a side of holder rib 35 facing lid wall 22, that is, on an outer side surface of annular holder rib 35. Rib elastic skirt 38 extends from an end surface of holder rib 35 and is bent so as to have an inclined surface flaring from the end surface. Rib elastic skirt 38 is formed unitarily with holder rib 35 and is elastically deformable.

Rib elastic skirt 38 is configured to close adhesive retraction path 36 formed between holder rib 35 and lid inner surface 25 of lid wall 22. As shown in FIG. 13, when lid 20 contacts adhesive holder 30B, rib elastic skirt 38 is pressed by the inner surface of lid wall 22 and elastically deforms to close adhesive retraction path 36. As a result, even when adhesive 40 pushed out by lid wall 22 flows into adhesive retraction path 36, adhesive 40 is blocked by rib elastic skirt 38, thereby preventing adhesive 40 from flowing over holder rib 35 and spreading. This configuration thus prevents adhesive 40 from being wastefully consumed, and allows adhesive 40 to be pushed toward adhesive guide path 33 and effectively used.

### Exemplary Embodiment 3

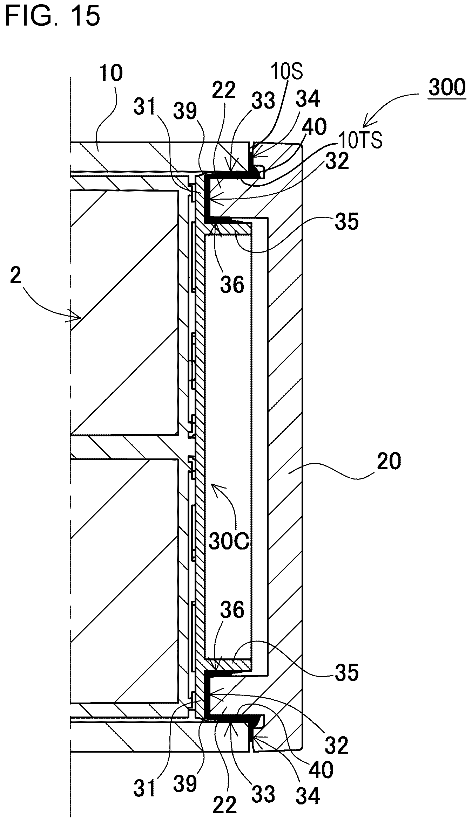

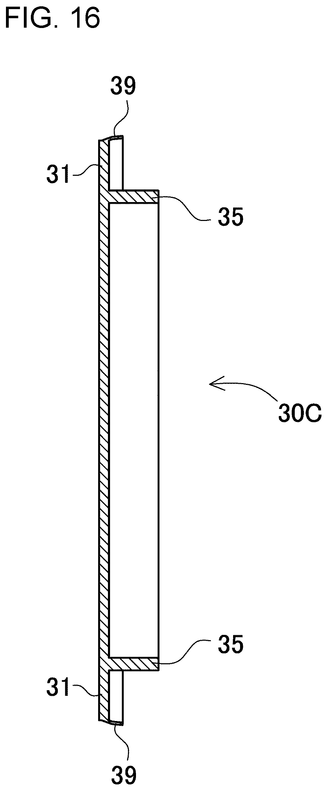

Adhesive holder 30 may include end edge elastic skirt 39 so as to introduce adhesive 40 toward adhesive guide path 33. Such an example is shown in FIGS. 15 and 16 as battery pack 300 according to Exemplary Embodiment 3. FIG. 15 is a cross-sectional view of battery pack 300. FIG. 16 is a side view of adhesive holder 30C. In the figures, components identical to those of Embodiment 1 are denoted by the same reference numerals, and their detailed description will be omitted.

### End Edge Elastic Skirts 39

Adhesive holder 30C shown in FIG. 16 includes end edge elastic skirt 39 having a ring shape along an end edge of flat region 31. End edge elastic skirt 39 is formed unitarily with adhesive holder 30C and is elastically deformable. In addition, end edge elastic skirt 39 is inclined toward opening end 10T of main tubular body 10. That is, end edge elastic skirt 39 is bent to be inclined in a direction toward lid 20 from the end edge of flat region 31. End edge elastic skirt 39 prevents adhesive 40, which is pushed out from adhesive holding space 32, from flowing into core housing space 12 along the end edge of flat region 31.

### Exemplary Embodiment 4

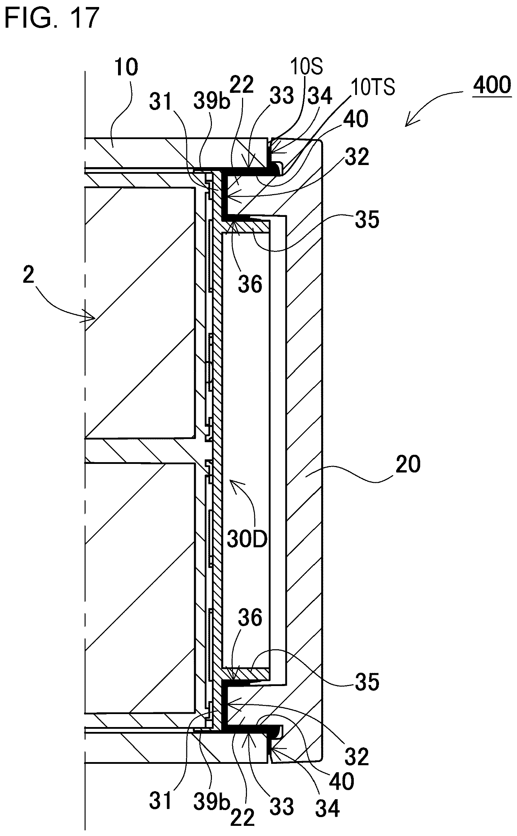

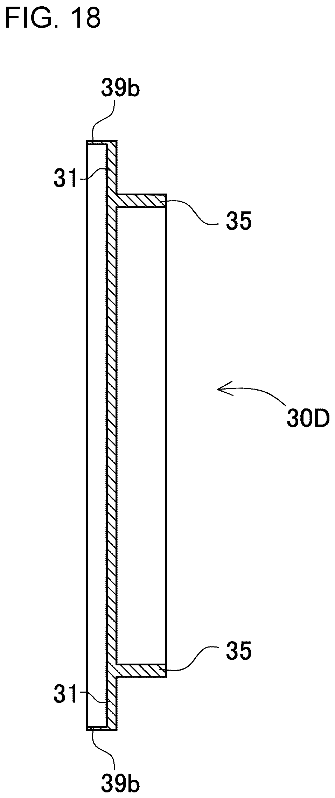

Alternatively, adhesive holder 30 may produce a path resistance making adhesive 40 hardly flow to the end edge side of flat region 31. Such an example is shown in FIGS. 17 and 18 as battery pack 400 according to Exemplary Embodiment 4. FIG. 17 is a cross-sectional view of battery pack 400. FIG. 18 is a side view of adhesive holder 30D. In these figures, components identical to those of Embodiment 1 are denoted by the same reference numerals, and their detailed description will be omitted.

### Path Resistance Skirt 39b

Adhesive holder 30D shown in FIG. 18 includes path resistance skirt 39b having a ring shape along the end edge of flat region 31. Path resistance skirt 39b extends toward core block 2 opposite to holder rib 35, and is flush with the flat surface of the end edge of flat region 31. Accordingly, path resistance skirt 39b extending along inner surface 10TS connected to end surface 10S of opening end 10T of main tubular body 10 produces path resistance between path resistance skirt 39b and inner surface 10TS connected to end surface 10S of opening end 10T of main tubular body 10. Adhesive 40 pushed out from adhesive holding space 32 is hardly pushed out toward core block 2 through path resistance skirt 39b due to the path resistance. A gap between path resistance skirt 39b and inner surface 10TS connected to end surface 10S of opening end 10T of main tubular body 10 is preferably narrower than a gap between lid wall 22 and inner surface 10TS connected to end surface 10S of opening end 10T of main tubular body 10. This configuration prevents adhesive 40 from flowing toward path resistance skirt 39b, and facilitates supplying adhesive 40 toward bonding interface 34 between main tubular body 10 and lid 20.

Rib elastic skirt 38, end edge elastic skirt 39, and path resistance skirt 39b described above may be provided alone or in combination.

### Exemplary Embodiment 5

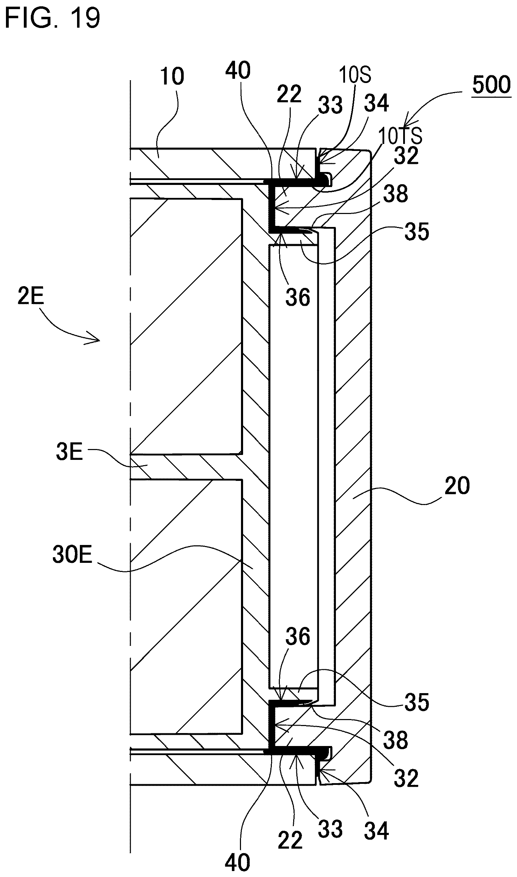

In the above examples, adhesive holding space 32 is defined by adding adhesive holder 30, so that adhesive 40 is easily supplied and the excess portion of adhesive 40 is introduced to be supplied to a desired portion. However, the disclosure is not limited to a configuration in which an adhesive holder is a separate member, and may be formed unitarily with another member, for example, the core block. Such an example is shown in FIG. 19 as battery pack 500 according to Exemplary Embodiment 5. In these figures, components identical to those of Embodiment 1 will be denoted by the same reference numerals, and their detailed description will be appropriately omitted.

In battery pack 500 shown in FIG. 19, adhesive holder 30E is formed on an end surface of core block 2E. For example, adhesive holder 30E is fixed to a battery holder of battery block 3E located on the end surface of core block 2E. Alternatively, an end surface shape of the battery holder is unitarily molded similarly to the adhesive holder. In this configuration, adhesive 40 is supplied before core block 2E is inserted into main tubular body 10, thus allowing adhesive 40 to be easily supplied. After core block 2E is inserted into main tubular body 10, lid 20 contacts core block 2E, and allows lid wall 22 to push out adhesive 40 and introduce the adhesive to bonding interface 34 between main tubular body 10 and a closing portion.

### Method for Manufacturing Battery Pack

A method for manufacturing a battery pack according to the embodiments of the disclosure includes the following processes. A battery pack to be manufactured includes: core block 2 including one or more secondary battery cells 1; main tubular body 10 having opening end 10T and having core housing space 12 inside for housing core block 2 therein; and lid 20 closing opening end 10T of main tubular body 10. Lid 20 includes protruding lid wall 22.

First, core block 2 is housed in core housing space 12 of the main tubular body10. Adhesive holder 30 is prepared. Adhesive holder 30 includes flat region 31 at least at a periphery of adhesive holder 30 and holder rib 35 protruding from flat region 31. Adhesive 40 is disposed between flat region 31 and holder rib 35.

Then, adhesive 40 is supplied to bonding interface 34 at which lid 20 is to be bonded to the end surface of opening end 10T of main tubular body 10 by causing lid 20 to face adhesive holder 30 while adhesive holder 30 is placed on an end surface of the core block 2 and by pressing lid wall 22 against flat region 31 to cause lid wall 22 to protrude toward flat region 31 so as to cause lid end surface 23 of lid wall 22 to push out adhesive 40 disposed in flat region31. Then, opening end 10T of main tubular body 10 is closed with lid 20 by curing adhesive 40.

### INDUSTRIAL APPLICABILITY

A battery pack according to the disclosure is suitably used as a power source device for a movable body such as an assist bicycle or an electric cart. The battery pack is also used as appropriate as a power source and the like of a portable electric device such as an electric cleaner or an electric tool.

### REFERENCE MARKS IN THE DRAWINGS

100, 200, 300, 400, 500 battery pack
1 secondary battery cell
2, 2E core block
3, 3E battery block
4 battery holder
5 lead plate
10 main tubular body
12 core housing space
20 lid
22 lid wall
23 lid end surface
24 lid facing surface
25 lid inner surface
26 adhesive induction space
30, 30B, 30C, 30D, 30E adhesive holder
31 flat region
32 adhesive holding space
33 adhesive guide path
34 bonding interface
35 holder rib
36 adhesive retraction path
37 opening
38 rib elastic skirt
39 end edge elastic skirt
39b path resistance skirt
40 adhesive
900 battery pack
910 main tubular body
920 lid
934 bonding interface
940 adhesive

## Claims

1. A battery pack comprising:
a core block (2, 2E) including one or more secondary battery cells (1);
a main tubular body (10) having an opening end (10T) and having a core housing space (12) therein, the core housing space (12) housing the core block (2, 2E) therein;
a lid (20) closing the opening end (10T) of the main tubular body (10); and
an adhesive (40) fixing the lid (20) to the main tubular body (10),
**characterized by**
an adhesive holder (30, 30B, 30C, 30D, 30E) provided between the lid (20) and the core block (2, 2E), the adhesive holder (30, 30B, 30C, 30D, 30E) having a surface facing the lid (20), the surface of the lid (20) having a flat region (31) at least at periphery of the surface of the lid (20), wherein
the adhesive holder (30, 30B, 30C, 30D, 30E) constitutes an adhesive holding space (32) on the flat region (31), the adhesive holding space (32) holding the adhesive (40), and
the lid (20) and the main tubular body (10) constitute an adhesive guide path (33) between the lid (20) and an inner surface (10TS) of the main tubular body (10), the adhesive guide path (33) allowing the adhesive holding space (32) to communicate with a bonding interface (34) at which the lid (20) is bonded to an end surface (10S) of the opening end (10T) of the main tubular body (10), the adhesive guide path (33) guiding the adhesive (40) to the bonding interface (34) through the adhesive guide path (33).

2. The battery pack according to claim 1, wherein the adhesive holding space (32) is located away from the bonding interface (34) at which the lid (20) is bonded to the end surface (10S) of the opening end (10T) of the main tubular body (10).

3. The battery pack according to claim 1 or 2, wherein
the lid (20) includes a lid wall (22) protruding in a protruding direction (D22) along an inner surface (10TS) of the main tubular body (10) connected to the end surface (10S) of the opening end (10T) of the main tubular body (10),
the lid wall (22) has a lid end surface (23) which is flat and which faces in the protruding direction (D22), and
the adhesive holding space (32) is defined between the flat region (31) and the lid end surface (23).

4. The battery pack according to claim 3, wherein
the lid wall (22) further has:
a lid facing surface (24) facing the inner surface (10TS) of the main tubular body (10) connected to the end surface (10S) of the opening end (10T) of the main tubular body (10), the lid facing surface (24) crossing the lid end surface (23); and
a lid inner surface (25) opposite to the lid facing surface (24), the lid inner surface (25) crossing the lid end surface (23), and
the adhesive guide path (33) is defined between the lid facing surface (24) of the lid (20) and the inner surface (10TS) of the main tubular body (10) connected to the end surface (10S) of the opening end (10T) of the main tubular body (10).

5. The battery pack according to claim 4, wherein
the adhesive holder (30, 30B, 30C, 30D, 30E) includes a holder rib (35) protruding from the flat region (31), the holder rib (35) facing the lid inner surface (25) of the lid wall (22), and
the lid wall (22) and the holder rib (35) constitute an adhesive retraction path (36) communicating with the adhesive holding space (32) between the lid inner surface (25) of the lid wall (22) and the holder rib (35).

6. The battery pack according to any one of claims 1 to 5, wherein the lid (20) constitutes an adhesive induction space (26) communicating with the adhesive guide path (33), the adhesive induction space (26) being branched from the bonding interface (34) at which the lid (20) is bonded to the end surface (10S) of the opening end (10T) of the main tubular body (10).

7. The battery pack according to any one of claims 1 to 6, wherein the adhesive holder (30, 30B, 30C, 30D, 30E) has a plate shape having an opening at a center thereof.

8. The battery pack according to any one of claims 1 to 7, wherein the adhesive holder (30, 30B, 30C, 30D, 30E) is formed unitarily with the core block (2, 2E).

9. A method for manufacturing a battery pack, comprising:
preparing a core block (2, 2E) including one or more secondary battery cells (1);
preparing a main tubular body (10) having an opening end (10T) and having a core housing space (12) therein;
preparing a lid (20) including a lid wall (22) protruding in a protruding direction (D22), the lid wall (22) having a lid end surface (23) which is flat and which faces in the protruding direction (D22);
preparing an adhesive holder (30, 30B, 30C, 30D, 30E) including a flat region (31) at least at a periphery of the adhesive holder (30, 30B, 30C, 30D, 30E) and a holder rib (35) protruding from the flat region (31);
housing the core block (2, 2E) in the core housing space (12) of the main tubular body (10);
disposing an adhesive (40) between the flat region (31) and the holder rib (35) of the adhesive holder (30, 30B, 30C, 30D, 30E);
supplying the adhesive (40) to a bonding interface (34) at which the lid (20) is to be bonded to an end surface (10S) of the opening end (10T) of the main tubular body (10) by causing the lid (20) to face the adhesive holder (30, 30B, 30C, 30D, 30E) while the adhesive holder (30, 30B, 30C, 30D, 30E) is placed on an end surface of the core block (2, 2E) and by pressing the lid wall (22) against the flat region (31) to cause the lid wall (22) to protrude toward the flat region (31) so as to cause the lid end surface (23) of the lid wall (22) to push out the adhesive (40) disposed in the flat region (31); and
closing the opening end (10T) of the main tubular body (10) with the lid (20) by curing the adhesive (40).

## Patentansprüche

1. Batteriepack, umfassend:
einen Kernblock (2, 2E), der eine oder mehrere Sekundärbatteriezellen (1) umfasst;
einen rohrförmigen Hauptkörper (10), der ein Öffnungsende (10T) aufweist und der einen Kernaufnahmeraum (12) darin aufweist, wobei der Kernaufnahmeraum (12) den Kernblock (2, 2E) darin aufnimmt;
einen Deckel (20), der das Öffnungsende (10T) des rohrförmigen Hauptkörpers (10) verschließt; und
einen Klebstoff (40), der den Deckel (20) an dem rohrförmigen Hauptkörper (10) befestigt,
**gekennzeichnet durch**
einen Klebstoffhalter (30, 30B, 30C, 30D, 30E), der zwischen dem Deckel (20) und dem Kernblock (2, 2E) vorgesehen ist, wobei der Klebstoffhalter (30, 30B, 30C, 30D, 30E) eine dem Deckel (20) zugewandte Fläche aufweist, wobei die Fläche des Deckels (20) einen ebenen Bereich (31) zumindest an einem Umfang der Fläche des Deckels (20) aufweist, wobei
der Klebstoffhalter (30, 30B, 30C, 30D, 30E) einen Klebstoffhalteraum (32) auf dem ebenen Bereich (31) bildet, wobei der Klebstoffhalteraum (32) den Klebstoff (40) hält, und
der Deckel (20) und der rohrförmige Hauptkörper (10) einen Klebstoffführungsweg (33) zwischen dem Deckel (20) und einer Innenfläche (10TS) des rohrförmigen Hauptkörpers (10) bilden, wobei der Klebstoffführungsweg (33) es dem Klebstoffhalteraum (32) ermöglicht, mit einer Klebegrenzfläche (34) in Verbindung zu stehen, an der der Deckel (20) mit einer Stirnfläche (10S) des Öffnungsendes (10T) des rohrförmigen Hauptkörpers (10) verklebt ist, wobei der Klebstoffführungsweg (33) den Klebstoff (40) durch den Klebstoffführungsweg (33) zu der Klebegrenzfläche (34) führt.

2. Batteriepack nach Anspruch 1, wobei der Klebstoffhalteraum (32) entfernt von der Klebegrenzfläche (34) angeordnet ist, an der der Deckel (20) mit der Stirnfläche (10S) des Öffnungsendes (10T) des rohrförmigen Hauptkörpers (10) verklebt ist.

3. Batteriepack nach Anspruch 1 oder 2, wobei
der Deckel (20) eine Deckelwand (22) umfasst, die in einer Vorsprungsrichtung (D22) entlang einer Innenfläche (10TS) des rohrförmigen Hauptkörpers (10) vorsteht, die mit der Stirnfläche (10S) des Öffnungsendes (10T) des rohrförmigen Hauptkörpers (10) verbunden ist,
die Deckelwand (22) eine Deckelendfläche (23) aufweist, die eben ist und die in der Vorsprungsrichtung (D22) weist, und
der Klebstoffhalteraum (32) zwischen dem ebenen Bereich (31) und der Deckelendfläche (23) definiert ist.

4. Batteriepack nach Anspruch 3, wobei
die Deckelwand (22) ferner aufweist:
eine Deckelgegenfläche (24), die der Innenfläche (10TS) des rohrförmigen Hauptkörpers (10) zugewandt ist, die mit der Stirnfläche (10S) des Öffnungsendes (10T) des rohrförmigen Hauptkörpers (10) verbunden ist, wobei die Deckelgegenfläche (24) die Deckelendfläche (23) kreuzt; und
eine Deckelinnenfläche (25), die der Deckelgegenfläche (24) gegenüberliegt,
wobei die Deckelinnenfläche (25) die Deckelendfläche (23) kreuzt, und
der Klebstoffführungsweg (33) zwischen der Deckelgegenfläche (24) des Deckels (20) und der Innenfläche (10TS) des rohrförmigen Hauptkörpers (10), die mit der Stirnfläche (10S) des Öffnungsendes (10T) des rohrförmigen Hauptkörpers (10) verbunden ist, definiert ist.

5. Batteriepack nach Anspruch 4, wobei
der Klebstoffhalter (30, 30B, 30C, 30D, 30E) eine Halterrippe (35) umfasst, die von dem ebenen Bereich (31) vorsteht, wobei die Halterrippe (35) der Deckelinnenfläche (25) der Deckelwand (22) zugewandt ist, und
die Deckelwand (22) und die Halterrippe (35) einen Klebstoffrückzugsweg (36) bilden, der mit dem Klebstoffhalteraum (32) zwischen der Deckelinnenfläche (25) der Deckelwand (22) und der Halterrippe (35) in Verbindung steht.

6. Batteriepack nach einem der Ansprüche 1 bis 5, wobei der Deckel (20) einen Klebstoffinduktionsraum (26) bildet, der mit dem Klebstoffführungsweg (33) in Verbindung steht, wobei der Klebstoffinduktionsraum (26) von der Klebegrenzfläche (34) abgezweigt ist, an der der Deckel (20) mit der Stirnfläche (10S) des Öffnungsendes (10T) des rohrförmigen Hauptkörpers (10) verklebt ist.

7. Batteriepack nach einem der Ansprüche 1 bis 6, wobei der Klebstoffhalter (30, 30B, 30C, 30D, 30E) eine Plattenform mit einer Öffnung in einer Mitte davon aufweist.

8. Batteriepack nach einem der Ansprüche 1 bis 7, wobei der Klebstoffhalter (30, 30B, 30C, 30D, 30E) einstückig mit dem Kernblock (2, 2E) ausgebildet ist.

9. Verfahren zur Herstellung eines Batteriepacks, umfassend:
Vorbereiten eines Kernblocks (2, 2E), der eine oder mehrere Sekundärbatteriezellen (1) umfasst;
Vorbereiten eines rohrförmigen Hauptkörpers (10), der ein Öffnungsende (10T) aufweist und der einen Kernaufnahmeraum (12) darin aufweist;
Vorbereiten eines Deckels (20), der eine Deckelwand (22) umfasst, die in einer Vorsprungsrichtung (D22) vorsteht, wobei die Deckelwand (22) eine Deckelendfläche (23) aufweist, die eben ist und die in der Vorsprungsrichtung (D22) weist;
Vorbereiten eines Klebstoffhalters (30, 30B, 30C, 30D, 30E), der einen ebenen Bereich (31) zumindest an einem Umfang des Klebstoffhalters (30, 30B, 30C, 30D, 30E) und eine Halterrippe (35) umfasst, die von dem ebenen Bereich (31) vorsteht;
Aufnehmen des Kernblocks (2, 2E) in dem Kernaufnahmeraum (12) des rohrförmigen Hauptkörpers (10);
Anordnen eines Klebstoffs (40) zwischen dem ebenen Bereich (31) und der Halterrippe (35) des Klebstoffhalters (30, 30B, 30C, 30D, 30E);
Zuführen des Klebstoffs (40) zu einer Klebegrenzfläche (34), an der der Deckel (20) mit einer Stirnfläche (10S) des Öffnungsendes (10T) des rohrförmigen Hauptkörpers (10) verklebt werden soll, indem der Deckel (20) veranlasst wird, dem Klebstoffhalter (30, 30B, 30C, 30D, 30E) zugewandt zu sein, während der Klebstoffhalter (30, 30B, 30C, 30D, 30E) auf einer Stirnfläche des Kernblocks (2, 2E) angeordnet ist, und indem die Deckelwand (22) gegen den ebenen Bereich (31) gedrückt wird, um die Deckelwand (22) zu veranlassen, zu dem ebenen Bereich (31) vorzustehen, um so die Deckelendfläche (23) der Deckelwand (22) zu veranlassen, den in dem ebenen Bereich (31) angeordneten Klebstoff (40) herauszudrücken; und
Verschließen des Öffnungsendes (10T) des rohrförmigen Hauptkörpers (10) mit dem Deckel (20) durch Aushärten des Klebstoffs (40).

## Revendications

1. Bloc-batterie comprenant :
un bloc central (2, 2E) comprenant un ou plusieurs éléments de batterie secondaire (1) ;
un corps tubulaire principal (10) ayant une extrémité d'ouverture (10T) et ayant un espace de logement central (12) en son sein, l'espace de logement central (12) logeant le bloc central (2, 2E) en son sein ;
un couvercle (20) fermant l'extrémité d'ouverture (10T) du corps tubulaire principal (10) ; et
un adhésif (40) fixant le couvercle (20) au corps tubulaire principal (10),
**caractérisé par**
un support d'adhésif (30, 30B, 30C, 30D, 30E) prévu entre le couvercle (20) et le bloc central (2, 2E), le support d'adhésif (30, 30B, 30C, 30D, 30E) ayant une surface faisant face au couvercle (20), la surface du couvercle (20) ayant une région plane (31) au moins à une périphérie de la surface du couvercle (20), dans lequel le support d'adhésif (30, 30B, 30C, 30D, 30E) constitue un espace de maintien d'adhésif (32) sur la région plane (31), l'espace de maintien d'adhésif (32) maintenant l'adhésif (40), et
le couvercle (20) et le corps tubulaire principal (10) constituent un chemin de guidage d'adhésif (33) entre le couvercle (20) et une surface intérieure (10TS) du corps tubulaire principal (10), le chemin de guidage d'adhésif (33) permettant à l'espace de maintien d'adhésif (32) de communiquer avec une interface de collage (34) au niveau de laquelle le couvercle (20) est collé à une surface d'extrémité (10S) de l'extrémité d'ouverture (10T) du corps tubulaire principal (10), le chemin de guidage d'adhésif (33) guidant l'adhésif (40) vers l'interface de collage (34) à travers le chemin de guidage d'adhésif (33).

2. Bloc-batterie selon la revendication 1, dans lequel l'espace de maintien d'adhésif (32) est situé à distance de l'interface de collage (34) au niveau de laquelle le couvercle (20) est collé à la surface d'extrémité (10S) de l'extrémité d'ouverture (10T) du corps tubulaire principal (10).

3. Bloc-batterie selon la revendication 1 ou 2, dans lequel
le couvercle (20) comprend une paroi de couvercle (22) faisant saillie dans une direction de saillie (D22) le long d'une surface intérieure (10TS) du corps tubulaire principal (10) reliée à la surface d'extrémité (10S) de l'extrémité d'ouverture (10T) du corps tubulaire principal (10),
la paroi de couvercle (22) a une surface d'extrémité de couvercle (23) qui est plane et qui fait face dans la direction de saillie (D22), et
l'espace de maintien d'adhésif (32) est défini entre la région plane (31) et la surface d'extrémité de couvercle (23).

4. Bloc-batterie selon la revendication 3, dans lequel
la paroi de couvercle (22) a en outre :
une surface de couvercle en regard (24) faisant face à la surface intérieure (10TS) du corps tubulaire principal (10) reliée à la surface d'extrémité (10S) de l'extrémité d'ouverture (10T) du corps tubulaire principal (10), la surface de couvercle en regard (24) croisant la surface d'extrémité de couvercle (23) ; et
une surface intérieure de couvercle (25) opposée à la surface de couvercle en regard (24), la surface intérieure de couvercle (25) croisant la surface d'extrémité de couvercle (23), et
le chemin de guidage d'adhésif (33) est défini entre la surface de couvercle en regard (24) du couvercle (20) et la surface intérieure (10TS) du corps tubulaire principal (10) reliée à la surface d'extrémité (10S) de l'extrémité d'ouverture (10T) du corps tubulaire principal (10).

5. Bloc-batterie selon la revendication 4, dans lequel
le support d'adhésif (30, 30B, 30C, 30D, 30E) comprend une nervure de support (35) faisant saillie à partir de la région plane (31), la nervure de support (35) faisant face à la surface intérieure de couvercle (25) de la paroi de couvercle (22), et
la paroi de couvercle (22) et la nervure de support (35) constituent un chemin de rétraction d'adhésif (36) communiquant avec l'espace de maintien d'adhésif (32) entre la surface intérieure de couvercle (25) de la paroi de couvercle (22) et la nervure de support (35).

6. Bloc-batterie selon l'une quelconque des revendications 1 à 5, dans lequel le couvercle (20) constitue un espace d'induction d'adhésif (26) communiquant avec le chemin de guidage d'adhésif (33), l'espace d'induction d'adhésif (26) étant ramifié à partir de l'interface de collage (34) au niveau de laquelle le couvercle (20) est collé à la surface d'extrémité (10S) de l'extrémité d'ouverture (10T) du corps tubulaire principal (10).

7. Bloc-batterie selon l'une quelconque des revendications 1 à 6, dans lequel le support d'adhésif (30, 30B, 30C, 30D, 30E) a une forme de plaque ayant une ouverture en un centre de celle-ci.

8. Bloc-batterie selon l'une quelconque des revendications 1 à 7, dans lequel le support d'adhésif (30, 30B, 30C, 30D, 30E) est formé d'un seul tenant avec le bloc central (2, 2E).

9. Procédé de fabrication d'un bloc-batterie, comprenant :
la préparation d'un bloc central (2, 2E) comprenant un ou plusieurs éléments de batterie secondaire (1) ;
la préparation d'un corps tubulaire principal (10) ayant une extrémité d'ouverture (10T) et ayant un espace de logement central (12) en son sein ;
la préparation d'un couvercle (20) comprenant une paroi de couvercle (22) faisant saillie dans une direction de saillie (D22), la paroi de couvercle (22) ayant une surface d'extrémité de couvercle (23) qui est plane et qui fait face dans la direction de saillie (D22) ;
la préparation d'un support d'adhésif (30, 30B, 30C, 30D, 30E) comprenant une région plane (31) au moins à une périphérie du support d'adhésif (30, 30B, 30C, 30D, 30E) et une nervure de support (35) faisant saillie à partir de la région plane (31) ;
le logement du bloc central (2, 2E) dans l'espace de logement central (12) du corps tubulaire principal (10) ;
la disposition d'un adhésif (40) entre la région plane (31) et la nervure de support (35) du support d'adhésif (30, 30B, 30C, 30D, 30E) ;
la fourniture de l'adhésif (40) à une interface de collage (34) au niveau de laquelle le couvercle (20) doit être collé à une surface d'extrémité (10S) de l'extrémité d'ouverture (10T) du corps tubulaire principal (10) en amenant le couvercle (20) à faire face au support d'adhésif (30, 30B, 30C, 30D, 30E) tandis que le support d'adhésif (30, 30B, 30C, 30D, 30E) est placé sur une surface d'extrémité du bloc central (2, 2E) et en pressant la paroi de couvercle (22) contre la région plane (31) pour amener la paroi de couvercle (22) à faire saillie vers la région plane (31) de manière à amener la surface d'extrémité de couvercle (23) de la paroi de couvercle (22) à expulser l'adhésif (40) disposé dans la région plane (31) ; et
la fermeture de l'extrémité d'ouverture (10T) du corps tubulaire principal (10) avec le couvercle (20) en durcissant l'adhésif (40).
